# EUROPEAN PATENT SPECIFICATION

(11) **EP 2 821 872 B1**
(45) Date of publication and mention of the grant of the patent: **08.02.2017**
(21) Application number: 13382257.7
(22) Date of filing: 01.07.2013
(51) Int. Cl.: G05B 19/42, B25J 9/16, B25J 11/00

(54) **Robotised cell, installation and method for deburring parts**
Roboterzelle, Anlage und Verfahren zum Entgraten von Teilen
Cellule robotisée, installation et procédé d'ébavurage de pièces

(43) Date of publication of application: 07.01.2015
(73) Proprietor: Getting Robotika S.L., 31800 Alsasua (Navarra) (ES); Aldakin S.L., 31800 Alsasua (Navarra) (ES)
(72) Inventor: Marinelarena Galarza, Iker, 31820 Etxarri Aranatz (Navarra) (ES); Etxeberria Martinez, Inigo, 31810 Urdiain (Navarra) (ES); Lopez De Alda Arrese, Francisco, 01260 Eguino (Alava) (ES)
(74) Representative: Stiebe, Lars Magnus

(56) References cited:
- WO-A1-97/17173
- US-A- 5 331 770
- ISELE J: "AUTOMATISIERTES GUSSPUTZEN", ZWF ZEITSCHRIFT FUR WIRTSCHAFTLICHE FERTIGUNG UNDAUTOMATISIERUNG, CARL HANSER VERLAG. MUNCHEN, DE, vol. 88, no. 6, 1 June 1993 (1993-06-01), pages 252-254, XP000303679, ISSN: 0947-0085
- GRUBER R ET AL: "NEUER WIRTSCHAFTLICHER ANSATZ FUER DAS GUSSPUTZEN MIT ROBOTERN", GIESSEREI, GIESSEREI VERLAG, DUSSELDORF, DE, vol. 80, no. 10, 17 May 1993 (1993-05-17), pages 307-311, XP000361361, ISSN: 0016-9765

## Description

### TECHNICAL FIELD

The present invention belongs to the field of manufacturing large-sized parts, such as forged or cast parts or parts for the construction of aircraft, wind turbine blades, and others; and more specifically, to the field of tools for deburring said parts.

### BACKGROUND OF THE INVENTION

In manufacturing processes for large sized parts it is common for these parts to present imperfections. For example, the parts tend to have pieces of surplus material that protrude irregularly from the part's edges or surface. These pieces of surplus material are known as burrs. Therefore, it is necessary to remove excess material from the part's edges or surface as a consequence of the manufacturing process. In the case of forged or cast parts this material is metal. In the case of other parts, such as wind turbine blades, it is usually a composite.

Normally, these burrs are removed by means of a deburring, grinding or down-roughing tool. These processes are very difficult to automate using a robot, given that the robot always travels to fixed programmed positions, and in the case of large parts, the tolerances with which the part has been obtained may be even greater than the size of the burr to be removed, in other words, the tip of the tool may travel to a position where there is no part, in the case of a very large negative tolerance, or collide against the part in very large positive tolerances. This is especially common in forged or cast parts, where the manufacturing tolerances are very high. In other words, the automation of a deburring and grinding process for a large sized part is very complex.

Furthermore, the robot has to adapt to the shape of the part, to which end the different part configurations must be programmed. This makes automation with a robot much more difficult when there are many differences in the parts.

Another drawback is that the parts to be perfected cannot always be fastened in tools (equipment) in a predetermined position.

Some commonly used grinding or down-roughing tools or cells are described below.

On the one hand, there are grinding cells for small parts, such as door handles, locksmith items, hardware, and parts of no more than 20 kg in general. The programming of these cells is fixed. Given that the part is small, the programming of trajectories and their adjustments is not too painstaking. The objective of these cells is usually to improve the surface finish, because the part normally has the correct dimensions. The robot moves the part and the down-roughing tool is fixed. These cells usually use gentle abrasive materials, since they do not need to remove much material. Therefore, their control is simple. However, these cells are inadequate for deburring parts with large dimensions, because it is impossible for a robot to move a part of this size. Finally, for large forged parts gentle abrasive materials cannot be used due to machine cycle times.

On the other hand, there are grinding cells for relatively "soft" metal parts. These parts are generally parts made of aluminium (for example, engine blocks). The objective of these cells tends to be to run over the edges and remove burrs. These parts are characterised in that the material to be removed (the burrs) are always located in the same position. The programming of existing cells is fairly complex and painstaking, and always has fixed trajectories. Furthermore, because the deburring tool is much tougher than the material to be removed, this variable does not need to be controlled. The part needs to be fastened accurately. However, these cells are not appropriate for deburring parts with large dimensions, such as forgings, because the method of programming the trajectories is not valid due to the fact that the material to be removed is not always located in the same position. Also, fastening a part of these dimensions and weights accurately is very complex and costly. Finally, the material of the down-roughing tool wears in the course of removing material, meaning that this variable must be controlled.

Down-roughing cells for small steel parts are also known. The mission of these cells is usually to run over the edges and remove burrs from the edges. As in the previous case, the surplus material is always located in the same position. The programming of existing cells is fairly complex, and always has fixed trajectories. The deburring tool tends to be based on cutting or machining with a parallel attack, meaning that its wear does not need to be continuously controlled. As in the previous case, the part has to be fastened accurately. However, for some large dimension parts, such as open forgings, it is not sufficient to run over the edges, rather grinding of the entire surface is necessary, which is not possible with this type of tool. Further, as already mentioned, to fasten a part of these dimensions and weights accurately is very complex and costly. And as in the previous case, the material of the down-roughing tool wears in the course of removing material, meaning that this variable has to be controlled.

Finally, grinding cells for flat steel parts are known. This grinding is carried out using automation systems with two axes of freedom, meaning that programming thereof is simple. In some cases, CNC techniques are used (Computer Numeric Control). Normally, the programming of movements is carried out in layers. These cells have a lot of capacity for removing material and control the pressure exerted. Some buffing tools even control their own wear. However, these tools cannot be used for deburring parts with large dimensions, for several reasons: they allow few degrees of freedom for reaching the entire surface of the part; programming in layers increases machine cycle time, which makes it inefficient; and the buffing tool must be powerful but compact.

United States patent US5331770-A discloses a method for scrapping off automatically an excessive portion of a workpiece by a cutting tool.

International patent application WO97/17173-A1 discloses a machining cell for machining of a piece. The cell comprises a robot and a tool attached to the robot for removing material from the surface of the piece.

### DESCRIPTION OF THE INVENTION

The present invention aims to overcome the aforementioned drawbacks resulting from the automation of down-roughing or deburring processes for large sized parts having at least one curved surface.

Thus, in a first aspect of the invention, a robotised cell is provided for deburring or removing surplus material from large sized parts having at least one curved surface, which comprises a base and a robot having at least 6 axes of freedom, wherein the robot comprises connection means so as to have, in operation, a grinding tool and a scanning system installed, wherein said scanning system is configured to inspect the shape of the part to be deburred and to capture its position, and wherein the grinding tool in turn comprises a control system configured to control the contact force exerted on the part to be deburred and an electro-spindle configured to incorporate and, when in use, make rotate, an abrasive element, in such a way that the robot is configured to, in operation, and in respect of a theoretical trajectory programmed beforehand, adapt its trajectory on the basis of the information obtained by means of the scanning system and by means of the control system, in such a way that the abrasive element attacks the part from the optimal angle and with the optimal pressure preset for each point of the part's surface.

Preferably, the scanning system is an artificial vision system in three dimensions which comprises a camera and software, the artificial vision system being configured to work through triangulation.

Preferably, the control system is configured to exert a compensation movement in the normal direction of the part to be deburred by means of a compensator.

The robotised cell is configured to hold the grinding tool with four different alternative orientations: in a first configuration, the control system is connected to the flange of the robot by means of a first connector and the electro-spindle is connected to the control system's rapid tool changer through a first connector; in a second configuration, the control system is connected to the flange of the robot by means of said first connector and the electro-spindle is connected to the control system's rapid tool changer by means of a second connector, leaving the electro-spindle situated perpendicularly in respect of its position in the first configuration; in a third configuration, the control system is connected to the robot's flange by means of a second connector and the electro-spindle is connected to the control system's rapid tool changer by means of said first connector; and in a fourth configuration, the control system is connected to the robot's flange by means of said second connector and the electro-spindle is connected to the control system's rapid tool changer by means of said first connector, leaving the control system in the third and fourth configurations situated perpendicularly in respect of its position in the first and second configurations.

In a second aspect of the invention, an installation for deburring large sized parts having at least one curved surface is provided, which comprises the aforesaid robotised cell. The robot is situated on a support. The installation additionally comprises a table that has a turn plate situated on it configured to receive the part to be deburred.

Preferably the support and the table are fixed and the turn plate is rotating.

In a possible embodiment, the turn plate comprises fastening means for fastening the part to be deburred.

In a possible embodiment, the support on which the robot is located is situated on a displaceable track.

The installation is preferably configured to deburr forged or cast parts weighing more than 100 kg.

In a third aspect of the invention, a method is provided for controlling the trajectory of a robot for deburring large sized parts having at least one curved surface. The method includes the stages of: selecting a part for deburring; loading a programme that comprises a theoretical model of said selected part; three-dimensionally scanning the part and obtaining the part's real position; if the part's real position is the same as the position with which theoretical trajectories have been programmed beforehand, loading a programme of theoretical trajectories for the zone of the part to be deburred; otherwise, modifying the coordinates system taken as reference in the previous programming of the theoretical trajectories according to the offset obtained through scanning, and next loading a programme of theoretical trajectories for the zone of the part to be deburred; checking the configuration of the deburring tool that the robot has; if the configuration of the deburring tool can reach all points on the surface to be deburred, checking the abrasive element installed on the deburring tool; otherwise, changing the configuration of the deburring tool and after choosing the configuration of the deburring tool that manages to reach all the points of the surface to be deburred, checking the abrasive element installed in the deburring tool; if the abrasive element is appropriate for down-roughing the selected zone, comparing the points cloud obtained from the scan with the surface of the theoretical model; otherwise, changing the abrasive element and after choosing the appropriate one, comparing the points cloud obtained from the scan with the surface of the theoretical model; if the deviation in the comparison is within a preset tolerance threshold, executing the deburring programme for the selected zone; otherwise, post-processing the deburring programme for the zone, loading the modified programme and executing the deburring programme for the selected zone.

Preferably, during said stage of checking the abrasive element installed on the deburring tool the type of abrasive element is checked and its state of wear.

Preferably, the stage of post-processing the deburring programme comprises adding to each point of the trajectory the variables robot's speed, speed of rotation of the deburring tool and pressure exerted on the part.

Finally, a computer programme designed to execute the stages of the method above is provided.

Benefits and additional characteristics of the invention will become apparent from the detailed description that follows and are specifically identified in the attached claims.

### BRIEF DESCRIPTION OF THE DRAWINGS

To complement the description and contribute towards a better understanding of the characteristics of the invention, according to an example of a practical embodiment thereof, a set of drawings is attached as an integral part of the description, in which by way of illustration and not limitation the following has been represented:
Figure 1 shows an outline of an installation for deburring large sized parts, according to a possible embodiment of the invention.
Figure 2 shows a view of the installation of figure 1.
Figure 3 shows an alternative view of the carriage and support on which the part to be deburred is placed, according to a possible embodiment of the invention.
Figures 4A and 4B show a possible embodiment of the grinding tool, which includes an electro-spindle with an abrasive element and a control system.
Figure 5 shows an outline of an electro-spindle with an abrasive element, according to a possible embodiment of the invention.
Figures 6A-6B show a first possible configuration of the grinding tool installed on the robot.
Figures 7A-7B show a second possible configuration of the grinding tool installed on the robot.
Figures 8A-8B show a third possible configuration of the grinding tool installed on the robot.
Figures 9A-9B show a fourth possible configuration of the grinding tool installed on the robot.
Figure 10 shows a flow chart of the adaptive control method of the robot of the invention.
Figure 11 shows an outline of the communications between the different components of the installation.

### DESCRIPTION OF A MODE OF EMBODIMENT OF THE INVENTION

Below is a description of a mode of embodiment of the robot and cell (or installation) and method of the invention, for removing burrs left on large sized parts.

Throughout this text, the terms "down-roughing", "deburring" or "grinding" are used indiscriminately to refer to the action of polishing or removing burrs or surplus materials from large sized parts. Any nuances of any of these terms that could be limited to any context or any type of specific material or any specific industrial activity must not be taken into account. On the contrary, these expressions are used with the intention of describing the action of removing burrs or surplus materials from large sized parts.

In the context of the present invention, a cell is understood as meaning the assembly formed by a robot configured to rough down burrs from parts, and to the carriage with the rotating support on which the part to be deburred is placed. In this text, the term "cell", "installation" or "station" is used indiscriminately to refer to the aforementioned assembly.

At the same time, "large parts" or "large sized parts" are understood as meaning those with a weight that exceeds approximately 100 kg, and preferably 150 kg. Furthermore, the cell is configured to work correctly with parts of up to 50 tonnes or even several dozen tonnes more. It must be understood that the cell functions correctly with parts having a smaller size (less than 100 kg) but that its added value is enhanced in parts weighing more than 100 kg, given that for smaller parts, there are other solutions that function more or less correctly.

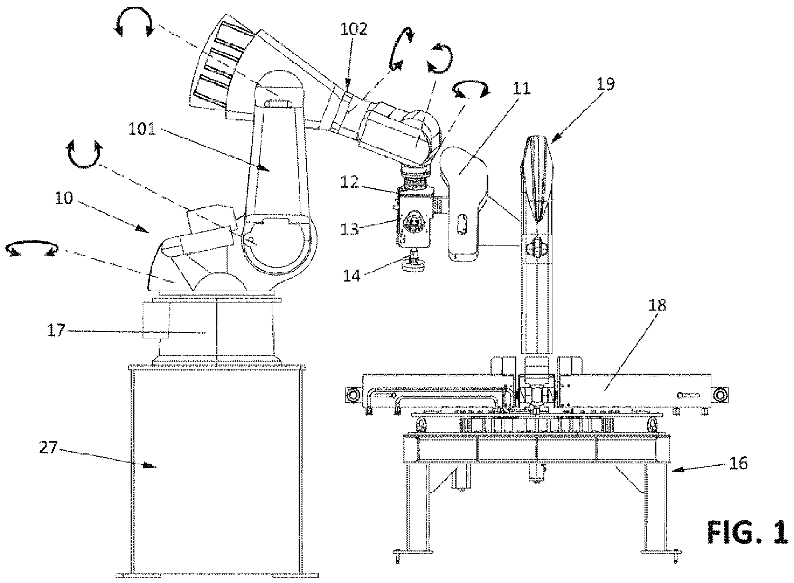

Figure 1 shows an outline of a grinding cell or installation for down-roughing, grinding or deburring large sized parts having at least one curved surface, whether concave or convex. The installation is formed by a robot 10 situated on a support 27 and a table 16 which comprises a turn plate on which a tool (equipment) 18 is placed and which in turn receives and supports the part 19 to be roughed down. The support 27 and the table 16 are fixed. The turn plate allows complete rotation (360º) in both directions. In other words, it can rotate without any stop in both directions. The robot 10 is a robot having at least 6 axes of movement. The robot 10 has a base 17, a first arm 101 joined to the base 17 of the robot and a second arm 102 joined to the end of the first arm 101 which is not joined to the base. At the end of the second arm 102 the grinding tool itself is installed. The part 19 to be roughed down remains substantially fixed on the tool (equipment) 18. The part 19 remains still in respect of the coordinates system of the tool (equipment)18, but moves in respect of the table 16 thanks to the turn plate (given that the turn plate rotates in respect of the table 16).

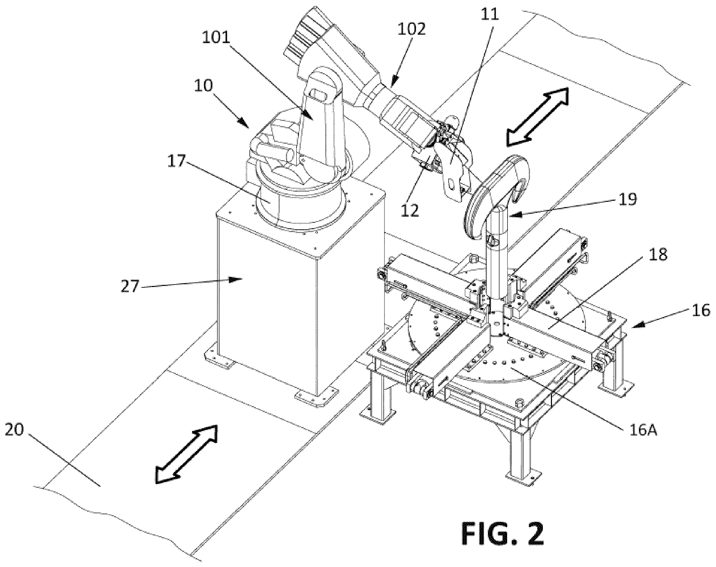

In figure 1 seven degrees of freedom of the cell are identified, of which six in the robot 10: one degree of freedom at the base of the robot, two degrees of freedom in the first arm 101, two degrees of freedom in the second arm 102 and a last degree of freedom in the element for coupling of the grinding tool; and a seventh degree of freedom in the rotation of the turn plate. In figure 1, these seven axes of movement are shown. Figure 2 shows a view of the installation of figure 1. In a particular embodiment, illustrated in figure 2, the support 27 is situated on a linear track, linear unit or gantry-type frame 20 that moves on one axis, this linear track 20 constituting an eighth degree of freedom. In another particular embodiment, not shown, the support 27 is situated on a track that can move on two or even three axes, this track providing a ninth (in the case of two axes) and a tenth (in the case of three axes) degree of freedom. The track, whether or not it is linear, is used in applications that require down-roughing of parts that are difficult to access using the cell's seven degrees of freedom.

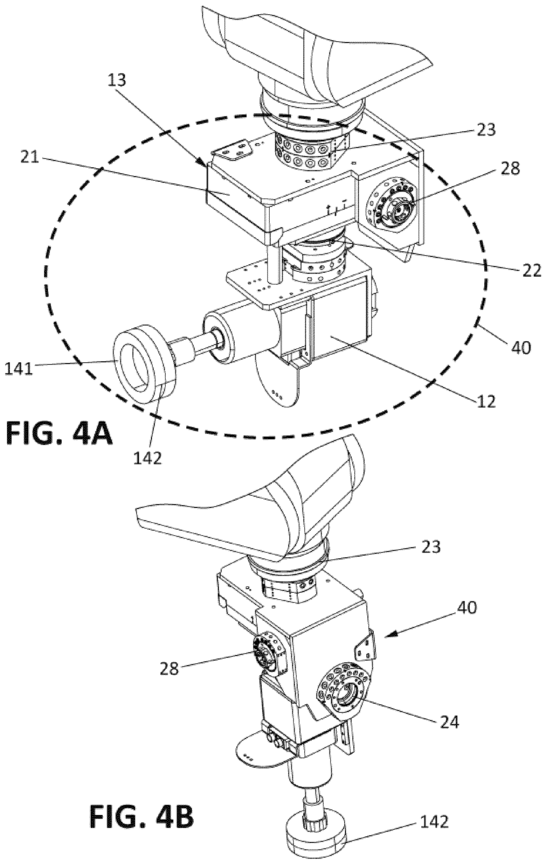

The robot 10 incorporates at least the following elements or equipment: a grinding tool (which is illustrated in detail in figures 4A-4D) and a scanning system 11. The grinding tool is in turn made up of at least one control system 13 for the contact force exerted on the part 19 and one electro-spindle 12 which in turn incorporates and makes rotate an abrasive element 14. Further on, each of these elements is described in detail.

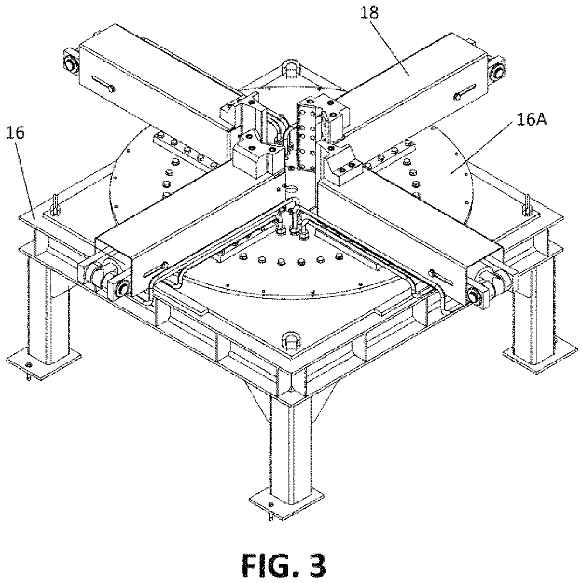

Figure 3 shows a close-up of table 16 and tool (equipment) 18 on which the part to be roughed down is placed. On the turn plate 16A the part 19 is placed so that it can be deburred and/or roughed down in an automated manner, as described in detail further on. The part 19 may be fastened in a tool (equipment) 18 in a determined position or not fastened. As may be understood, fastening will be necessary or not depending on the size and shape of the part. It is worth noting that the cell of the invention is specially designed for working correctly in the event that the part 19 is not perfectly in place (with a lot of accuracy). In other words, it is not necessary to put the part into place accurately using additional elements. In a possible embodiment, the tool (equipment) comprises fastening means. In a more particular embodiment, the fastening means are hydraulic jaws. In figure 3, the fastening element 18 is shown, which in this case is a hydraulic jaw.

The device is specially designed to rough down large sized parts having at least one curved surface, whether concave or convex. In figure 2, which shows a view and position of the same installation as figure 1, a curved hook-shaped part can be observed. In this case, the part 19 is a metal part made by forging or casting. Non-limiting examples of parts that can be roughed down using the installation of the invention are: forged or cast parts, where the tolerance is very high; parts for the construction of aircraft, wind turbine blades or other parts used in other construction or industry sectors. Non-limiting examples of materials with which the parts can be made are steel, iron, composites or any alloys or combinations thereof. The installation is especially designed to rough down or deburr large parts (minimum of approximately 100 kg and a maximum that can easily exceed 50-60 tonnes), but as mentioned, it is perfectly prepared to buff correctly parts of a smaller size or weight (of 30 to 100 kg for example), although its added value is enhanced in parts of more than 100 kg, given that for smaller parts there are other solutions in existence, which function satisfactorily.

As explained further on, the robot 10 (and the installation or the cell) is designed to adapt to the shape of the part 19. The robot 10 is therefore programmable, in such a way that the different references of the parts can be programmed, which can be very different to each other, making their automation complicated.

The robot 10 is provided with the capacity to modify its trajectories automatically, adapting said trajectories to the different positions in which the part is placed and to the inherent variables of the parts, for example forged or cast (variation in scale, growths, impurities on the surfaces, variability in heights due to inexact placement of male parts, position and size of burrs, etc.) and thereby ensure that the abrasive element 14 always attacks the part 19 with the optimal angle and pressure defined for each point of the surface of the part 19. To do this, the robot 10 comprises adaptive control algorithms which optimise the robot's trajectories, the pressure of the tool on the surface of the part, the choice of tool to be used, etc., so as to reduce the machine cycle time with the quality required. This is explained further on.

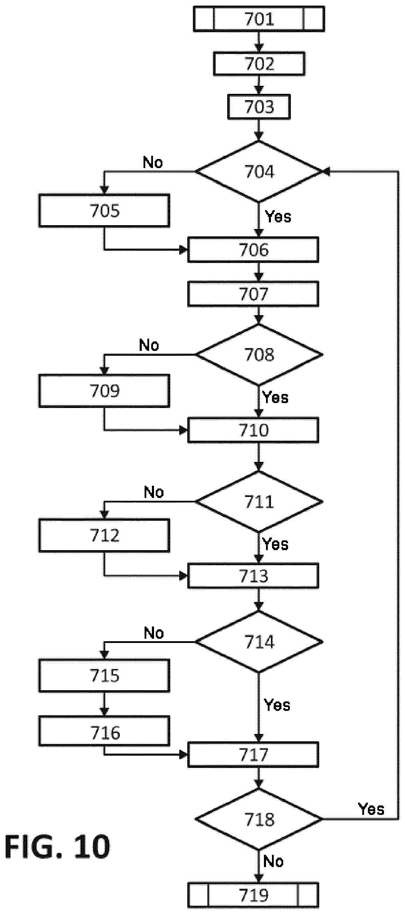

The adaptive capacity of the deburring system is achieved by introducing the variables captured by the different sensors (of the scanning system 11 and of the pressure control system 13) and the different parameters defined by the operator in the adaptive trajectory algorithms that automatically modify the robot's theoretical trajectories. Further on, in relation to figure 10, the algorithm that governs the trajectories of the robot of the invention is described.

The scanning system 11 is designed to inspect the shape of the part 19 and to compare it to its CAD model implemented in the control software. Therefore, it is necessary to have a theoretical design and trajectories to travel to specific points. Using adapted conventional vision algorithms, the part is modelled by comparing it with the theoretical design. The scanning system 11 must be robust against very dusty environments and changes in lighting and immune to different tonalities of the part, including rust. The scanning system 11 is physically connected to the robot 10 to carry out the visual inspection as the robot moves according to the programmed trajectory. In a possible implementation, the scanning system 11 is connected to a connector 28 located on the control system 13 of the grinding element 40, illustrated for example in figures 4A and 4B.

Preferably, an artificial vision system in three dimensions (3D) 11 which works through triangulation is used as a scanning system 11. The artificial vision system in three dimensions (3D) 11 comprises a camera and software specially designed for the device of the invention. The system 11 is provided with a CAD model to carry out the assembly of the points cloud obtained during capture and to mount it on the model so as to be able to measure the surpluses or absences of material. The camera's light emission system is preferably a continuous laser. A non-limiting example of a camera that could be used is a Ranger model SICK camera. In use, the robot orders a scan, the camera collects the deformation in determined points of time (for example, but not by way of limitation, every 1 ms), and captures a 3D image of the part 19. In this way the shape of the part and its references in respect of the robot can be known.

Therefore, the robot adapts its trajectory on the basis of:
(1) the designed and programmed theoretical trajectory;
(2) the result of the 3D vision, since the latter indicates that the position of the part does not coincide exactly with its theoretical one; and
(3) the result of the control system 13, as indicated below.

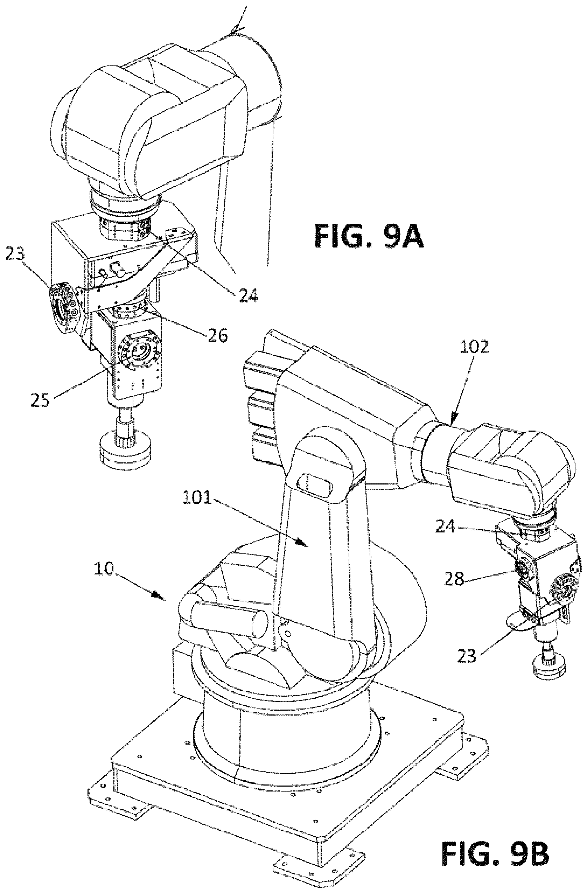

The scanning system 11 superficially inspects the part 19, reads its position and scans its morphology. In this way, it is possible to know whether there is a surplus of material (burrs) and to modify the trajectories of the TCP (Tool Centre Point) of the robot, which is the reference point and is preferably situated at the end of the second arm 102 of the robot to which the grinding tool is attached at the point of coupling or fastening. Specifically, the TCP comes by default and is normally situated in the middle of the flange of the robot's sixth axis (see figure 1, axis 6). The grinding tool is fixed to this flange (see for example element 24 in figure 9B). When the grinding tool is engaged in the robot's fastening point, the robot carries the TCP to the work point. The scanning system 11 also makes it possible to know the position of the part 19 on the table 16 (or fastening tool, if applicable) and to thereby correct the reference coordinates of the part in respect of the robot's coordinates system.

As previously mentioned, it is not necessary for the part 19 to be put into place on the table 16 with a lot of accuracy. This is so because the scanning system 11 captures the position of the part 19 and informs the robot, which redefines position "0" (reference). It is very important to define the reference with the scanning system 11 correctly, since subsequently, when the control system 13 operates, the abrasive element must attack the part in a manner that is perpendicular to the contact zone (surface of the part 19). Therefore, the images captured by the scanning system 11 make it possible for the robot to know indirectly where to make contact between the abrasive element and the part to be roughed down.

Next, in relation for example to figures 4A and 4B the grinding tool 40 is described in detail, which comprises a control system or control element 13 of the contact force exerted on the part 19 and an electro-spindle or mill 12 that in turn incorporates an abrasive element 14. The abrasive element 14 is the element that, in contact with part 19, and thanks to the movement of the electro-spindle 12, manages to rough down or deburr the part 19. The abrasive element 14 is preferably, but not by way of limitation, an abrasive disc. The abrasive element 14, is preferably, but not by way of limitation, a buffing disc. Due to the fact that the part 19 moves thanks to the rotation of the turn plate 16A (on the table 16), the free end of the abrasive element 14 installed on the electro-spindle 12 is left in contact with the surface of the part 19.

As explained below, the robot is provided with the capacity to hold the grinding tool with different orientations thereby modifying the morphology of the assembly formed by the robot and the tool coupled thereto, thus reaching all the orientations that the different surfaces have and which could not otherwise be deburred in an automated manner.

The pressure control of the grinding is performed by means of a control system or control element 13 with compensation based on the angle in respect of the horizontal plane, in order to compensate for the weight of the tool. Therefore, the control system 13 of exerted pressure is an active sensor due to the fact that the tool works with different angles in respect of the horizontal plane. The pressure control is achieved by means of a preferably pneumatic compensator or compensation system 21 of one axis. The control system 13 has been provided with different coupling points to be able to compensate on all three axes (X,Y,Z). These coupling points are preferably a connector (preferably of the male type) 22 that can be coupled to connectors (preferably of the female type) 25, 26 of the electro-spindle, and some coupling points 23, 24 to couple the control system to the robot's arm. The control system 13 always exerts force on the part 19 so that contact is not lost, but allows displacement of the compensator or compensation system 21 to adapt to the different manufacturing tolerances. Figures 4A-4B show a possible implementation of the control system 13 which comprises a compensator 21, at the free end of which a rapid tool changer 22 is included (for example, a male type connector). The control system 13 additionally has two coupling points or female connectors 23, 24, it being possible to choose which one of the two is coupled to the robot's flange. The connector 24 can only be observed in the view of figure 4B.

In a possible embodiment, a conventional compensator 21 is used. A conventional compensator 21 available on the market is capable of providing compensation of 40 mm (± 20 mm). The compensator 21 comprises a ruler or measuring element that indicates where the compensator carriage 21 is located and sends an analogue signal to the robot to indicate the carriage's position. With this measurement, the TCP is corrected.

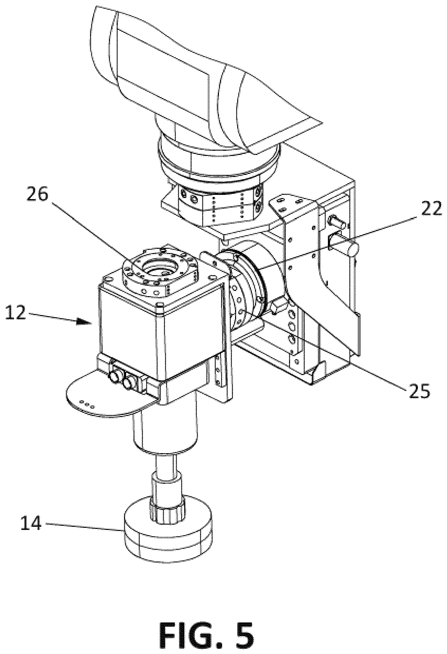

Due to the large size and weight of the part 19 and to the fact that it presents curves (at least one), it is very complicated to reach all the areas of the part 19 with the abrasive element 14. For this reason, it is necessary to be able to reach the part 19 with all of its free surfaces, which are normally a first abrasive surface and a second abrasive surface. This is shown in figure 5, which outlines an electro-spindle 12 with an abrasive element 14. In figure 4A, it can be observed how the abrasive element 14 has a first abrasive surface 141 and a second abrasive surface 142. In this implementation the first abrasive surface is flat, but does not have to be so. The second abrasive surface 142 is the edge of the abrasive element 14. In order to achieve this versatility of the abrasive element 14, the control system 13 can be fastened in two possible positions (perpendicular to each other) (connectors 23 24) on the flange or fastening point of the robot to attack different surfaces of the part. Also, as the electro-spindle 12 also has two fastening positions perpendicular to each other (connectors 25, 26) to be able to be coupled to the rapid tool changer or connector 22 of the control system 13, the assembly definitely allows four possible configurations of the tool 40, in order to be able to reach therefore any surface of the part 19. The control system 13 has, by means of the compensator carriage 21, the possibility of a determined displacement of the electro-spindle 12. The robot 10 works in the central position (0) of the compensator carriage 21, in such a way that the abrasive element 14, thanks to the displacement allowed by the compensator 21 of the control system 13, has a greater stroke capability. In a possible embodiment, the compensator 21 is based on a conventional device, whose displacement is designed to be more or less 20 mm. Alternative embodiments allow for different displacements to be used.

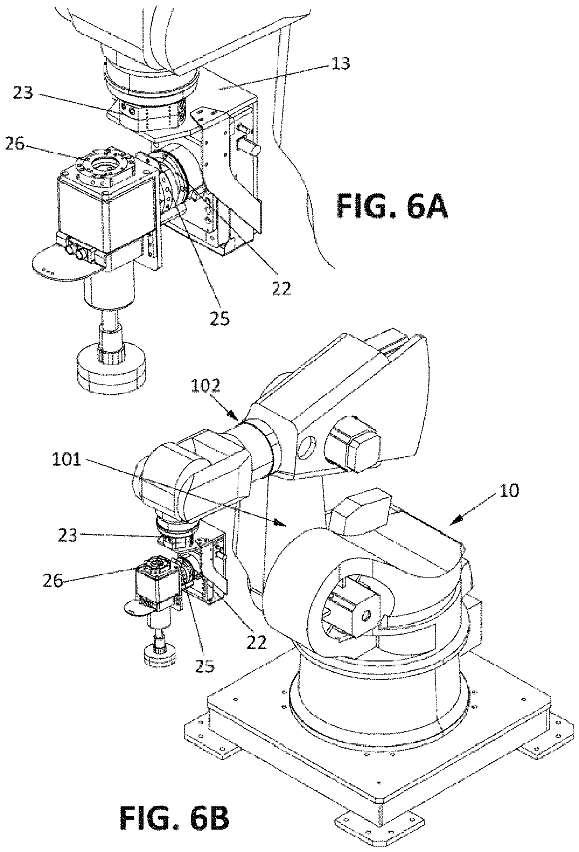

Figures 6A-B to 9A-B show the four possible configurations of the grinding tool 40 on the robot:
In the first configuration (figures 6A-6B), the control system 13 is connected to the robot's flange by means of connector 23, leaving connector 24 free (not seen in the views of figures 6A-6B). And the electro-spindle 12 is connected to the rapid tool changer 22 of the control system 13 by means of connector 25, leaving connector 26 free.

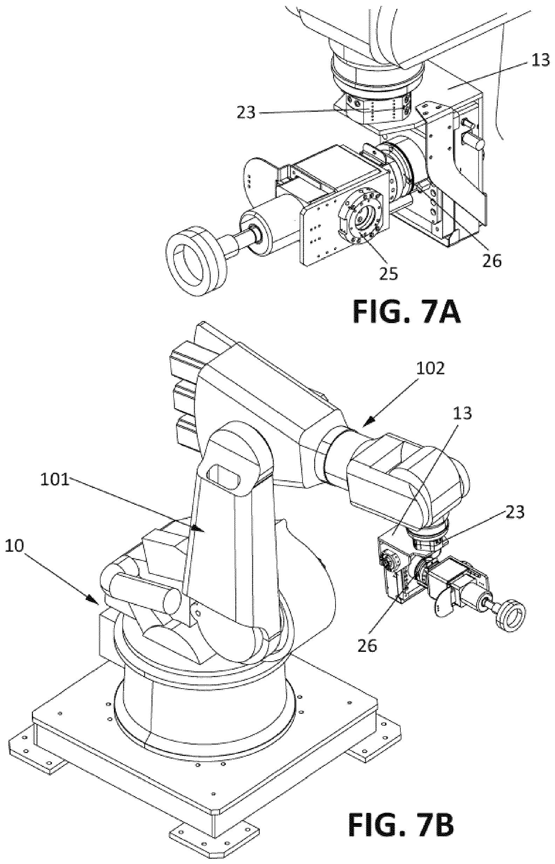

In the second configuration (figures 7A-7B), the control system 13 is connected to the robot's flange by means of the same connector 23, leaving connector 24 free (not seen in the views of figures 6A-6B). However, the electro-spindle 12 is connected to the rapid tool changer 22 of the control system 13 by means of connector 26, leaving connector 25 free.

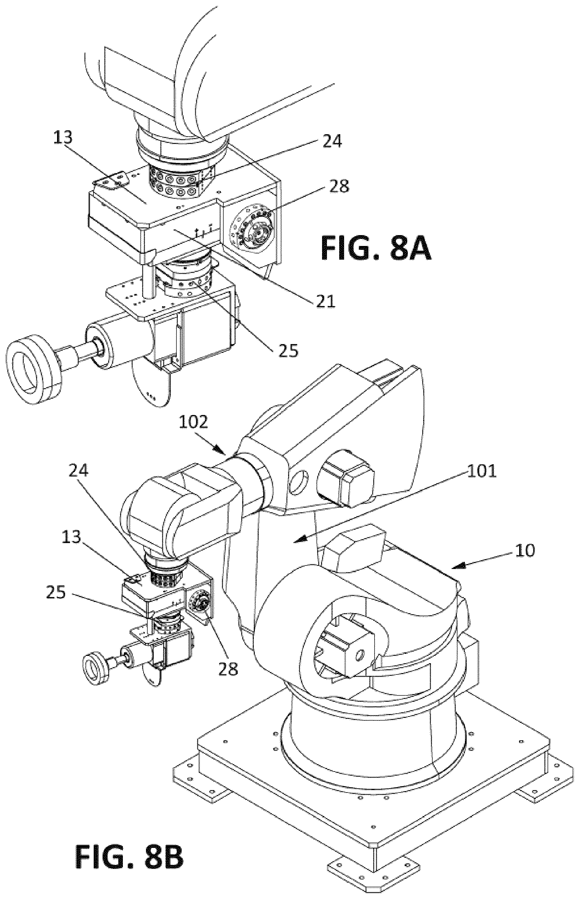

In the third configuration (figures 8A-8B), the control system 13 is connected to the robot's flange by means of the other connector (connector 24), leaving connector 23 free (only seen in the view of figure 8B). And the electro-spindle 12 is connected to the rapid tool changer 22 of the control system 13 by means of connector 25, leaving connector 26 free (not seen in the views of figures 8A-8B).

Finally, in the fourth configuration (figures 9A-9B), the control system 13 is connected to the robot's flange by means of the same connector 24, leaving connector 23 free. However, the electro-spindle 12 is connected to the rapid tool changer 22 of the control system 13 by means of connector 26 (which cannot be seen in the views of figures 9A-9B), leaving connector 25 free.

With these four configurations achieved by combining the two coupling points to the robot (connectors 23, 24) of the control system 13 and the two coupling points (connectors 25, 26) of the electro-spindle 12 to the rapid tool changer 22 of the control system 13, there is control of at least the pressure between the abrasive element 14 and the surface to be roughed down, and the speed of rotation of the abrasive element. With these parameters plus the robot's travelling speed, the control algorithms are made to optimise the deburring cycle time. In other words, with the speed of rotation of the abrasive element, the pressure and speed of travel of the robot, the amount of material that is removed from the part 19 is controlled.

In summary, the deburring tool is interactive and capable of exerting on the surface to be roughed down, the pressure required by the control system 13. To this end, the deburring tool has a closed loop control of the pressure at which it works and is provided with means for knowing at which angle it is working in respect of the horizontal plane.

On the other hand, it is necessary to control wear of the abrasive element 14, on both its first abrasive surface 141 and its second abrasive surface 142. As mentioned previously, the robot works with the TCP. This is usually made to correspond with the end of the abrasive element that must be in contact with the surface of the part to be treated. As the abrasive element becomes worn (due to continuous friction against the part 19) the TCP has to be corrected. Principally, wear reduces the diameter of the abrasive element (diameter in the case of it being a disc or a ring) and its height, which is the dimension that varies when working with surface 141. The height is important for compensation.

The programming of the robot's trajectories is performed offline using software, preferably CAD/CAM. The software sends the robot, preferably in machine language, the coordinates of the points it needs to carry out the trajectory. With this method, the programming of the curved surfaces is simplified. Use of the CAD/CAM software provides the theoretical trajectories that the robot must carry out for the final grinding of the part. In practice this is not the case, as a high number of variables interfere altering the correct trajectory. Some of these variables are:
- The rough part (part to be roughed down) is always different from the stored theoretical part. By inspecting the part and comparing it to the CAD module, the places where there is surplus material (burrs) is obtained and the trajectories can be modified accordingly. For this reason, the new point has other different coordinates.
- The base against which all the points are referenced always changes as there is always a variation when it comes to placing the part in its position, meaning that the base has to be corrected. It should be noted that it is thanks to this possible correction of the base, together with the robot's ease to reach any point of the part, that the part 19 does not have to be placed accurately on the table 16. Placing a large sized part with extreme accuracy would make the automatic buffing enormously expensive.
- The diameter of the abrasive element, preferably a disc, decreases meaning that the tool to which the points of the trajectory are referenced is also changing continuously.

Therefore, the theoretical point programmed at the time of programming the trajectories and in the form of *P0(x,y,z,a,b,c),base,tool* becomes a variable that is updated in real time with the format *P0'(x',y',z',a',b',c'),base',tool'*= *(x0+inc,y0+inc,z0+inc,a0+inc,b0+inc,c0+inc),base+inc,tool+inc,* where "x and *z*", indicate the coordinates of point *PO* and "*a b c*" indicate the orientation of the reference system, where a is the rotation of x, *b* is the rotation of *y,* and *c* is the rotation of z. *Base* is the system of coordinates to which each point is referenced and *tool* is the TCP with which the robot travels to that point.

Finally, the device also comprises a fast and dynamic interface for programming the robot's movements for technicians with an industrial profile. This human-machine interface (HMI) or operator interface must be very intuitive despite the complexity of the automation of the down-roughing system. To do this, graphic interfaces are used and the number of variables that depend on the operator is minimised. Specifically, a PC is used with an industrial touchscreen, on which a control system has been installed (for example, a Scada system) incorporating specific programmed modules. With this HMI all parameters of all the systems are grouped together under one single HMI, making it possible for an appropriately trained operator to operate the cell or installation.

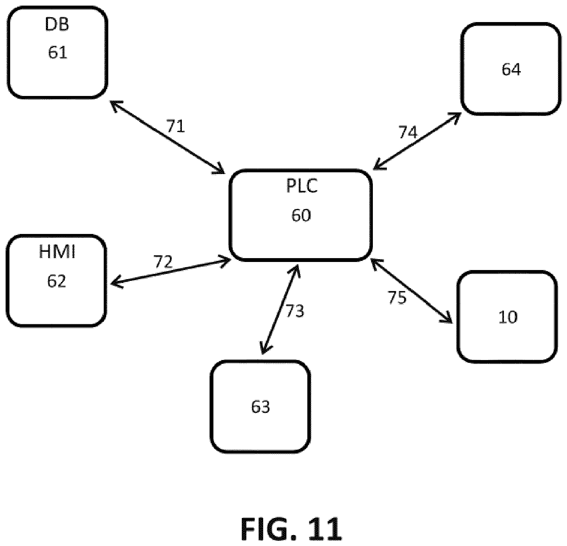

Figure 11 shows an outline of the communications between the different elements of the installation. The intelligence or control of all the elements resides in a master 60. In a preferred embodiment, this control element is a PLC. From the PLC communication is established:
- with a database 61 (for example, a PC), preferably through Ethernet 71;
- with the HMI 62, preferably through Ethernet 72;
- with the vision system 63, preferably through Ethernet 73;
- with the robot 10, preferably through Ethernet 75; and
- with a remote control system (field office) 64, preferably through Internet 74.

In the PLC most of the control algorithms have been implemented, which are carried out using the IEC61131-3 programming standard. All other control algorithms are implemented in the robot itself, for which the KRL programming language has been used.

Next the adaptive adjustment method of the trajectories of the robot of the invention is described. A block diagram of the algorithm is shown in figure 10.

The method begins with the selection (stage 701) of the part required for roughing down. The method therefore starts on the basis of theoretical models that have been previously obtained of the part or parts required for polishing. Next, the programme for the selected part is loaded (stage 702). Beforehand or afterwards, the part to be roughed down 19 is placed on the turn plate 16A of the table 16 and is optionally fastened. The robot then orders the three-dimensional scanning of the part (stage 703), which is performed by the scanning system 11.

Following this scan (condition 704), if the real position of the part is the same as the position with which the theoretical trajectories have been programmed offline (in other words, if the part is placed with total accuracy and perfectly referenced), then loading (stage 706) takes place of the programme of theoretical trajectories for the zone of the part to be roughed down. If on the contrary, the real position of the part is not the same as the position with which the theoretical trajectories have been programmed offline, then (stage 705) the system of coordinates that has been considered as reference in the offline programming of the theoretical trajectories is modified on the basis of the offset obtained with the 3D scanning. Once this modification of the coordinates has been done, loading (stage 706) of the programme of theoretical trajectories for the zone of the part to be deburred is performed.

After loading the programme of theoretical trajectories for the zone of the part to be deburred, the configuration (one of the four configurations of figures 4A to 4D) of the deburring tool that the robot has is checked (stage 707). Following this check (condition 708), if the configuration of the deburring tool allows all the points of the surface to be deburred to be reached, then the tool (abrasive element) installed on the deburring tool is checked (stage 710). Specifically, the type of abrasive element and its state of wear is checked. If on the contrary, the configuration of the deburring tool does not allow all the points on the surface to be deburred to be reached, then the configuration of the deburring tool is changed (stage 709).

After selecting the configuration of the deburring tool that manages to reach all the points of the surface to be deburred, the tool (abrasive element) installed on the deburring tool (type of abrasive element and its state of wear) is checked (stage 710). Following this check, if the tool (abrasive element) is appropriate for deburring the selected zone (condition 711), then the points cloud obtained from the 3D scan is compared (stage 713) with the surface of the CAD model. If on the contrary, the tool (abrasive element) is not the appropriate one for deburring the selected zone, then (stage 712) the deburring tool is changed. Once the appropriate tool (abrasive element) for deburring the selected zone has been chosen, then the points cloud obtained with the 3D scan is compared (stage 713) with the surface of the CAD model.

Then, if the deviation (condition 714) in the comparison is within the tolerance established or permitted for that zone, the deburring programme for the selected zone is executed (stage 717). If on the contrary, the deviation (condition 714) in the comparison is not within the tolerance established for that zone, then there is a post-processing (stage 715) of the deburring programme for the zone, adding to each point of the trajectory the variables of the robot's speed, the tool's speed of the rotation and the pressure exerted on the part. Next the modified programme is loaded (stage 716), after which the deburring programme for the selected zone is executed (stage 717).

Once the selected zone has been deburred, it is checked (condition 718) whether in the part's deburring programme there is any other zone to be deburred. If there is not (stage 719) the deburring cycle is ended. If there is any other zone to be deburred, stage 704 is returned to in order to check whether the part's real position is the same as that with which the theoretical trajectories have been programmed offline. The programme continues to run in this way until it is verified (condition 718) that according to the part's deburring programme there is no other zone to be deburred. At this moment, execution of the programme is ended.

Throughout this text, the word "comprises" and its variants (such as "comprising", etc.,) must not be interpreted in an excluding manner, in other words, it does not exclude the possibility of what is described including other elements, steps, etc.

At the same time, the invention is not limited to the specific embodiments that have been described and rather also encompasses, for example, the variants that can be embodied by a person of ordinary skill in the art (for example, with regard to the choice of materials, dimensions, components, configuration, etc.), within the scope of what can be inferred from the claims.

## Claims

1. A robotised cell for deburring or removing surplus material from large sized parts having at least one curved surface, which comprises a base (17) and a robot (10) having at least 6 axes of freedom,
wherein the robot (10) comprises connection means so as to have, in operation, a grinding tool (40) and a scanning system (11) installed,
and wherein said grinding tool (40) comprises in turn a control system (13) configured to control the contact force exerted on the part to be deburred (19) and an electro-spindle (12) configured to incorporate and, in use, make rotate an abrasive element (14),
in such a way that the robot (10) is configured so that, in operation, and in respect of a previously programmed theoretical trajectory, it can adapt its trajectory on the basis of the information obtained by means of said scanning system (11) and by means of said control system (13) in such a way that the abrasive element (14) attacks the part (19) with the optimal angle and pressure predefined for each point on the surface of the part (19),
the robotised cell being **characterised in that** said scanning system (11) is configured to inspect the shape of the part to be deburred (19) and to capture its position, and **in that** the robot (10) of the robotised cell is configured to hold the grinding tool (40) with four different alternative orientations: in a first configuration, the control system (13) is connected to the flange of the robot (10) by means of a first connector (23) and the electro-spindle (12) is connected to the rapid tool changer (22) of the control system (13) by means of a first connector (25); in a second configuration, the control system (13) is connected to the flange of the robot (10) by means of said first connector (23) and the electro-spindle (12) is connected to the rapid tool changer (22) of the control system (13) by means of a second connector (26), leaving the electro-spindle (12) situated perpendicularly in respect of its position in the first configuration; in a third configuration, the control system (13) is connected to the flange of the robot (10) by means of a second connector (24) and the electro-spindle (12) is connected to the rapid tool changer (22) of the control system (13) by means of said first connector (25); and in a fourth configuration, the control system (13) is connected to the flange of the robot (10) by means of said second connector (24) and the electro-spindle (12) is connected to the rapid tool changer (22) of the control system (13) by means of said second connector (26), leaving the control system (13) in the third and fourth configurations situated perpendicularly in respect of its position in the first and second configurations.

2. The robotised cell of claim 1, wherein said scanning system (11) is an artificial vision system in three dimensions comprising a camera and software, with the artificial vision system being configured to work by triangulation.

3. The robotised cell of any of the preceding claims, wherein said control system (13) is configured to exert by means of a compensator (21) a compensation movement in the normal direction of the part to be deburred (19).

4. An installation for deburring large sized parts having at least one curved surface, comprising the robotised cell of any of the preceding claims, wherein said robot (10) is situated on a support (27), wherein the installation comprises additionally a table (16) on which a turn plate (16A) is placed configured to receive the part to be deburred (19).

5. The installation of claim 4, wherein said support (27) and table (16) are fixed and said turn plate (16A) is rotating.

6. The installation of any of claims 4 or 5, wherein said turn plate (16A) comprises fastening means (18) to fasten the part to be deburred (19).

7. The installation of any of claims 4 to 6, wherein said support (27) on which the robot (10) is situated is situated on a displaceable track (20).

8. The installation of any of claims 4 to 7, configured to deburr forged or cast parts weighing more than 100 kg.

9. A method for controlling the trajectory of a robot for deburring or removing surplus material from large sized parts having at least one curved surface, comprising the stages of:
- selecting (701) a part to be deburred;
- loading (702) a programme that comprises a theoretical model of said selected part;
**characterised by** the stages of:
- scanning (703) the part in three dimensions and obtaining the part's real position;
- if (704) the part's real position is the same as the position with which the theoretical trajectories have been previously programmed, loading (706) a programme of theoretical trajectories of the zone of the part to be deburred; otherwise, modifying (705) the coordinates system that has been considered as reference in the prior programming of the theoretical trajectories on the basis of the offset obtained from the scan, and next loading (706) a programme of theoretical trajectories of the zone of the part to be deburred;
- checking (707) the configuration of the deburring tool that the robot has;
- if (708) the configuration of the deburring tool allows to reach all the points of the surface to be deburred, checking (710) the abrasive element installed on the deburring tool; otherwise, changing (709) the configuration of the deburring tool and once the configuration has been selected of the deburring tool that manages to reach all the points on the surface to be deburred, checking the abrasive element installed on the deburring tool;
- if (711) the abrasive element is appropriate for deburring the selected zone, comparing (713) the points cloud obtained from the scan with the surface of the theoretical model; otherwise, changing (712) the abrasive element and after selecting the appropriate one, comparing (713) the points cloud obtained from the scan with the surface of the theoretical model;
- if deviation (714) in the comparison is within a preset tolerance threshold, executing (717) the deburring programme for the selected zone; otherwise, post-processing the deburring programme for the zone, loading (716) the modified programme and executing (717) the deburring programme for the selected zone.

10. The method of claim 9, wherein said stage of checking (710) the abrasive element installed on the deburring tool involves checking the type of abrasive element and its state of wear.

11. The method of any of claims 9 or 10, wherein said stage of post-processing the deburring programme comprises adding to each point of the trajectory the variables robot's speed, speed of rotation of the deburring tool and pressure exerted on the part.

12. Computer programme comprising the coded instructions for the computer programme to carry out the method of any of claims 9 to 11.

## Patentansprüche

1. Roboterzelle zum Entgraten oder Entfernen von überschüssigem Material von großformatigen Teilen mit zumindest einer gekrümmten Oberfläche, die eine Basis (17) und einen Roboter (10) mit zumindest 6 Freiheitsachsen aufweist,
wobei der Roboter (10) Verbindungsmittel aufweist, um im Betrieb ein Schleifwerkzeug (40) und ein Scansystem (11) installiert zu bekommen, und wobei das Schleifwerkzeug (40) wiederum ein Steuersystem (13) zum Steuern der auf das zu entgratende Teil (19) ausgeübten Kontaktkraft und eine zum Aufnehmen und im Betrieb zum Rotierenlassen eines abrasiven Elements (14) ausgebildete Elektrospindel (12) aufweist,
derart, dass der Roboter (10) so ausgebildet ist, dass er im Betrieb und bezüglich einer vorab programmierten theoretischen Bahn seine Bahn auf Basis der mittels des Scansystems (11) und mittels des Steuersystems (13) erhaltenen Informationen anpassen kann,
derart, dass das abrasive Element (14) das Teil (19) mit für jeden Punkt auf der Oberfläche des Teils (19) vordefiniertem optimalen Winkel und Druck angreift,
wobei die Roboterzelle **dadurch gekennzeichnet ist, dass** das Scansystem (11) zum Inspizieren der Form des zu entgratenden Teils (19) und zum Erfassen seiner Position ausgebildet ist, und dadurch, dass der Roboter (10) der Roboterzelle zum Halten des Schleifwerkzeugs (40) mit vier verschiedenen alternativen Orientierungen ausgebildet ist: in einer ersten Konfiguration sind das Steuersystem (13) mit dem Flansch des Roboters (10) mittels eines ersten Verbinders (23) und die Elektrospindel (12) mit dem Schnellwerkzeugwechsler (22) des Steuersystems (13) mittels eines ersten Verbinders (25) verbunden; in einer zweiten Konfiguration sind das Steuersystem (13) mit dem Flansch des Roboters (10) mittels des ersten Verbinders (23) und die Elektrospindel (12) mit dem Schnellwerkzeugwechsler (22) des Steuersystems (13) mittels eines zweiten Verbinders (26) verbunden, wobei die Elektrospindel (12) senkrecht bezüglich ihrer Position in der ersten Konfiguration angeordnet belassen wird; in einer dritten Konfiguration sind das Steuersystem (13) mit dem Flansch des Roboters (10) mittels eines zweiten Verbinders (24) und die Elektrospindel (12) mit dem Schnellwerkzeugwechsler (22) des Steuersystems (13) mittels des ersten Verbinders (25) verbunden; und in einer vierten Konfiguration sind das Steuersystem (13) mit dem Flansch des Roboters (10) mittels des zweiten Verbinders (24) und die Elektronspindel (12) mit dem Schnellwerkzeugwechsler (22) des Steuersystems (13) mittels des zweiten Verbinders (26) verbunden, wobei das Steuersystem (13) in der dritten und vierten Konfiguration senkrecht bezüglich seiner Position in der ersten und zweiten Konfiguration angeordnet belassen wird.

2. Roboterzelle gemäß Anspruch 1, wobei das Scansystem (11) ein künstliches Sichtsystem in drei Dimensionen mit einer Kamera und Software ist, wobei das künstliche Sichtsystem zum Arbeiten durch Triangulation ausgebildet ist.

3. Roboterzelle gemäß einem der vorhergehenden Ansprüche, wobei das Steuersystem (13) zum Ausüben einer Kompensationsbewegung in der Normalrichtung des zu entgratenden Teils (19) mittels eines Kompensators (21) ausgebildet ist.

4. Anlage zum Entgraten von großformatigen Teilen mit zumindest einer gekrümmten Oberfläche, aufweisend die Roboterzelle eines der vorhergehenden Ansprüche, wobei der Roboter (10) auf einer Stütze (27) angeordnet ist, wobei die Anlage zusätzlich einen Tisch (16), auf dem eine zum Aufnehmen des zu entgratenden Teils (19) ausgebildete Drehplatte (16A) angeordnet ist, aufweist.

5. Anlage gemäß Anspruch 4, wobei die Stütze (27) und der Tisch (16) fixiert sind und die Drehplatte (16A) rotiert.

6. Anlage gemäß einem der Ansprüche 4 oder 5, wobei die Drehplatte (16A) Befestigungsmittel (18) zum Befestigen des zu entgratenden Teils (19) aufweist.

7. Anlage gemäß einem der Ansprüche 4 bis 6, wobei die Stütze (27), auf der der Roboter (10) angeordnet ist, auf einer versetzbaren Schiene (20) angeordnet ist.

8. Anlage gemäß einem der Ansprüche 4 bis 7, ausgebildet zum Entgraten von mehr als 100 kg wiegenden, geschmiedeten oder gegossenen Teilen.

9. Verfahren zum Kontrollieren der Bahn eines Roboters zum Entgraten oder Entfernen von überschüssigem Material von großformatigen Teilen mit zumindest einer gekrümmten Oberfläche mit folgenden Schritten:
- Auswählen (701) eines Teil zum Entgraten;
- Laden (702) eines Programms, das ein theoretisches Modell des ausgewählten Teils aufweist;
**gekennzeichnet durch** die Schritte:
- Scannen (703) des Teils in drei Dimensionen und Erhalten der tatsächlichen Position des Teils;
- wenn (704) die tatsächliche Position des Teils die gleiche ist, wie die Position, mit der die theoretischen Bahnen vorab programmiert worden sind, Laden (706) eines Programms von theoretischen Bahnen der Zone des zu entgratenden Teils; andernfalls, Modifizieren (705) des Koordinatensystems, das als Referenz bei der früheren Programmierung der theoretischen Bahnen berücksichtigt wurde, auf Basis des aus dem Scan erhaltenen Versatzes und anschließend Laden (706) eines Programms der theoretischen Bahnen der Zone des zu entgratenden Teils;
- Prüfen (707) der Konfiguration des Entgratungswerkzeugs, das der Roboter hat;
- wenn (708) die Konfiguration des Entgratungswerkzeugs das Erreichen von allen Punkten der zu entgratenden Oberfläche erlaubt, Prüfen (710) des an dem Entgratungswerkzeug installierten abrasiven Elements; andernfalls, Wechseln (709) der Konfiguration des Entgratungswerkzeugs und, sobald die Konfiguration des Entgratungswerkzeugs ausgewählt ist, die ein Erreichen von allen Punkten auf der zu entgratenden Oberfläche ermöglicht, Prüfen des an dem Entgratungswerkzeug installierten abrasiven Elements;
- wenn (711) das abrasive Element zum Entgraten der ausgewählten Zone geeignet ist, Vergleichen (713) der von dem Scan erhaltenen Punktewolke mit der Oberfläche des theoretischen Modells; andernfalls, Wechseln (712) des abrasiven Elements und nach dem Auswählen des geeigneten, Vergleichen (713) der von dem Scan erhaltenen Punktewolke mit der Oberfläche des theoretischen Modells;
- wenn Abweichung (714) in dem Vergleich innerhalb einer voreingestellten Toleranzgrenze ist, Ausführen (717) des Entgratungsprogramms für die ausgewählte Zone; andernfalls, Nachbearbeiten des Entgratungsprogramms für die Zone, Laden (716) des modifizierten Programms und Ausführen (717) des Entgratungsprogramms für die ausgewählte Zone.

10. Verfahren gemäß Anspruch 9, wobei der Schritt des Prüfens (710) des an dem Entgratungswerkzeug installierten abrasiven Elements das Prüfen des Typs des abrasiven Elements und seines Verschleißzustandes beinhaltet.

11. Verfahren gemäß einem der Ansprüche 9 oder 10, wobei der Schritt des Nachbearbeitens des Entgratungsprogramms das Hinzufügen der Variablen Robotergeschwindigkeit, Rotationsgeschwindigkeit des Entgratungswerkzeugs und auf das Bauteil ausgeübter Druck zu jedem Punkt der Bahn aufweist.

12. Computerprogramm mit den kodierten Instruktionen für das Computerprogramm zum Ausführen des Verfahrens gemäß einem der Ansprüche 9 bis 11.

## Revendications

1. Cellule robotisée pour ébarber ou retirer l'excédent de matériau de pièces de grande taille ayant au moins une surface courbe, qui comprend une base (17) et un robot (10) ayant au moins 6 axes de liberté,
dans laquelle le robot (10) comprend un moyen de connexion de façon à avoir, pendant le fonctionnement, un outil de meulage (40) et un système de balayage (11) installés,
et dans lequel ledit outil de meulage (40) comprend à son tour un système de contrôle (13) configuré pour contrôler la force de contact exercée sur la pièce à ébarber (19), et une électro-broche (12) configurée pour incorporer et, pendant l'utilisation, faire tourner un élément abrasif (14),
de telle façon que le robot (10) est configuré de sorte que, pendant le fonctionnement, et en respectant une trajectoire théorique préalablement programmée, il puisse adapter sa trajectoire sur la base des informations obtenues à l'aide dudit système de balayage (11) et à l'aide dudit système de contrôle (13), de telle façon que l'élément abrasif (14) attaque la pièce (19) avec l'angle et la pression optimaux prédéfinis pour chaque point qui se trouve sur la surface de la pièce (19),
la cellule robotisée étant **caractérisée en ce que** ledit système de balayage (11) est configuré pour inspecter la forme de la pièce à ébarber (19) et pour capturer sa position, et **en ce que** le robot (10) de la cellule robotisée est configuré pour maintenir l'outil de meulage (40) selon quatre orientations alternatives différentes : dans une première configuration, le système de contrôle (13) est connecté à la bride du robot (10) à l'aide d'un premier connecteur (23), et l'électro-broche (12) est connectée au changeur d'outil rapide (22) du système de contrôle (13) à l'aide d'un premier connecteur (25) ; dans une seconde configuration, le système de contrôle (13) est connecté à la bride du robot (10) à l'aide dudit premier connecteur (23), et l'électro-broche (12) est connecté au changeur d'outil rapide (22) du système de contrôle (13) à l'aide d'un second connecteur (26), en laissant l'électro-broche (12) située perpendiculairement à sa position dans la première configuration ; dans une troisième configuration, le système de contrôle (13) est connecté à la bride du robot (10) à l'aide d'un second connecteur (24), et l'électro-broche (12) est connectée au changeur d'outil rapide (22) du système de contrôle (13) à l'aide dudit premier connecteur (25) ; et, dans une quatrième configuration, le système de contrôle (13) est connecté à la bride du robot (10) à l'aide dudit second connecteur (24), et l'électro-broche (12) est connectée au changeur d'outil rapide (22) du système de contrôle (13) à l'aide dudit second connecteur (26), en laissant le système de contrôle (13), dans la troisième et la quatrième configuration situé perpendiculairement à sa position dans la première et la seconde configuration.

2. Cellule robotisée selon la revendication 1, dans laquelle ledit système de balayage (11) est un système de vision artificielle en trois dimensions comprenant une caméra et un logiciel, le système de vision artificielle étant configuré pour fonctionner par triangulation.

3. Cellule robotisée selon l'une quelconque des revendications précédentes, dans lequel ledit système de contrôle (13) est configuré pour exercer, à l'aide d'un compensateur (21) un mouvement de compensation dans la direction normale de la pièce à ébarber (19).

4. Installation d'ébarbage de pièces de grande taille ayant au moins une surface courbe, comprenant la cellule robotisée selon l'une quelconque des revendications précédentes, dans laquelle ledit robot (10) est situé sur un support (27), l'installation comprenant en outre une table (16) sur laquelle une plaque tournante (16A) est placée configurée pour recevoir la pièce à ébarber (19).

5. Installation selon la revendication 4, dans laquelle ledit support (27) et ladite table (16) sont fixes, et ladite plaque tournante (16A) est en rotation.

6. Installation selon l'une quelconque des revendications 4 ou 5, dans laquelle ladite plaque tournante (16A) comprend des moyens de fixation (18) destinés à fixer la pièce à ébarber (19).

7. Installation selon l'une quelconque des revendications 4 à 6, dans laquelle ledit support (27) sur lequel le robot (10) est situé est situé sur un rail mobile (20).

8. Installation selon l'une quelconque des revendications 4 à 7, configurée pour ébarber des pièces forgées ou coulées pesant plus de 100 kg.

9. Méthode de contrôle de la trajectoire d'un robot destiné à ébarber ou à retirer l'excédent de matériau de pièces de grande taille ayant au moins une surface courbe, comprenant les étapes de :
- sélection (701) d'une pièce à ébarber ;
- chargement (702) d'un programme qui comprend un modèle théorique de ladite pièce sélectionnée ;
**caractérisée par** les étapes de :
- balayage (703) de la pièce en trois dimensions et obtention de la position réelle de la pièce ;
- si (704) la position réelle de la pièce est identique à la position avec laquelle les trajectoires théoriques ont été préalablement programmées, chargement (706) d'un programme de trajectoires théoriques de la zone de la pièce à ébarber ; sinon, modification (705) du système de coordonnées qui a été considéré comme référence lors de la programmation préalable des trajectoires théoriques sur la base du décalage obtenu à partir du balayage, puis chargement (706) d'un programme de trajectoires théoriques de la zone de la pièce à ébarber ;
- vérification (707) de la configuration de l'outil d'ébarbage que le robot possède ;
- si (708) la configuration de l'outil d'ébarbage permet d'atteindre tous les points de la surface à ébarber, vérification (710) de l'élément abrasif installé sur l'outil d'ébarbage ; sinon, changement (709) de la configuration de l'outil d'ébarbage, et, une fois que la configuration a été sélectionnée pour que l'outil d'ébarbage arrive à atteindre tous les points situés sur la surface à ébarber, vérification de l'élément abrasif installé sur l'outil d'ébarbage ;
- si (711) l'élément abrasif est approprié pour ébarber la zone sélectionnée, comparaison (713) du nuage de points obtenu avec le balayage avec la surface du modèle théorique ; sinon, changement (712) de l'élément abrasif et, après avoir sélectionné un élément approprié, comparaison (713) du nuage de points obtenu avec le balayage avec la surface du modèle théorique ;
- si l'écart (714) de comparaison se trouve dans un seuil de tolérance prédéfinies, exécution (717) du programme d'ébarbage pour la zone sélectionnée ; sinon, après le traitement du programme d'ébarbage de la zone, chargement (716) du programme modifié et exécution (717) du programme d'ébarbage pour la zone sélectionnée.

10. Méthode selon la revendication 9, dans laquelle ladite étape de vérification (710) de l'élément abrasif installé sur l'outil d'ébarbage implique la vérification du type d'élément abrasif et de son état d'usure.

11. Méthode selon l'une quelconque des revendications 9 ou 10, dans laquelle ladite étape de post-traitement du programme d'ébarbage comprend l'ajout, à chaque point de la trajectoire, des variables de vitesse du robot, de vitesse de rotation de l'outil d'ébarbage, et de pression exercée sur la pièce.

12. Programme d'ordinateur comprenant les instructions codées pour permettre au programme d'ordinateur d'exécuter la méthode selon l'une quelconque des revendications 9 à 11.
